# FASCICULE DE BREVET EUROPEEN

(11) **EP 2 914 841 B1**
(45) Date de publication et mention de la délivrance du brevet: **01.03.2017**
(21) Numéro de dépôt: 13745039.1
(22) Date de dépôt: 30.07.2013
(51) Int. Cl.: F02M 63/00, F02M 61/16, F16K 27/02, H01F 7/128, F02M 63/02

(54) **VANNE HAUTE PRESSION**
HOCHDRUCKVENTIL
HIGH-PRESSURE VALVE

(30) Priorité: 30.10.2012 FR 1260350
(43) Date de publication de la demande: 09.09.2015
(73) Titulaire: Delphi International Operations Luxembourg S.à r.l., 4940 Bascharage (LU)
(72) Inventeur: MARECHAL, Michel, F-41150 Chouzy Sur Cisse (FR); SAUVAGE, Frederic, F-45190 Beaugency (FR); MAGRE, Matthieu, 45000 Orleans (FR); DUPONT, Richard, 37100 Tours (FR)
(74) Mandataire: Delphi France SAS
(86) Numéro de dépôt international: PCT/EP2013/066016
(87) Numéro de publication internationale: WO 2014/067679

(56) Documents cités:
- DE-A1-102005 034 939
- DE-A1-102006 042 214
- FR-A1- 2 889 572

## Description

### DOMAINE TECHNIQUE

L'invention est relative à une vanne haute pression pour circuit d'injection diesel et plus particulièrement l'agencement de ces composants et la fabrication de ceux-ci.

### ARRIERE-PLAN TECHNOLOGIQUE DE L'INVENTION

Les circuits d'injection directe de carburant dans les moteurs à combustion interne comprennent une vanne pilotée qui peut être en prise directe sur une rampe commune distribuant le carburant sous pression à des injecteurs. La vanne est normalement fermée et peut être actionnée pour ouvrir un passage et laisser sortir du carburant permettant ainsi de contrôler en permanence la pression dans le circuit d'injection.

On connait entre autre des vannes comprenant un corps tubulaire dans lequel une aiguille pilotée par un actionneur électromagnétique obture ou libère le passage de sortie du carburant. En fonctionnement normal le passage est fermé et sa fermeture est assurée par l'actionneur piloté qui exerce sur l'aiguille une force de fermeture s'opposant à la force d'ouverture exercée sur l'aiguille par le carburant sous pression. On connait de EP1915557 une vanne comprenant un corps magnétique sur lequel sont empilés la carcasse de bobine de l'électroaimant, un joint d'étanchéité et la bobine en elle-même. L'ensemble est maintenu en place par l'épaulement de la bobine.

Cet agencement n'est cependant pas étanche puisqu'un fluide étranger au carburant, de l'eau par exemple, peut pénétrer dans la carcasse en passant autour de la rondelle.

Il est devenu urgent de proposer des vannes parfaitement étanches et facile à fabriquer et assembler.

### RESUME DE L'INVENTION

La présente invention résout les problèmes ci-dessus mentionnés en proposant une vanne haute pression partie au circuit d'injection diesel à rampe commune d'un moteur à combustion interne. La vanne comprend un corps axial sur lequel est fixé un électroaimant ayant une carcasse, une bobine et, un noyau enfermé sous une cloche chapeautant le corps. Le noyau actionne une aiguille entre un état ouvert et un état fermé. La carcasse a une partie tubulaire axiale ouverte à une première extrémité, l'extrémité haute relativement au sens des Figures, et une partie discale radiale à une seconde extrémité, l'extrémité basse relativement au sens des Figures. La partie discale a un trou central joignant une surface intérieure opposée à une surface extérieure. Le corps est pourvu extérieurement d'une surface cylindrique de centrage et d'une surface radiale d'appui. La carcasse s'agence sur le corps autour de la surface de centrage, la surface discale extérieure étant en contact surfacique contre la surface d'appui du corps. Un espace tubulaire est alors formé entre le corps et la partie tubulaire de la carcasse. La bobine est agencée dans l'espace tubulaire lui-même fermé par un anneau de fermeture. L'étanchéité entre le corps et la carcasse est assurée par un joint en élastomère agencé autour de la surface de centrage et contre la surface discale intérieure.

La vanne comprend de plus une rondelle de coincement montée serrée sur la surface de centrage du corps et agencée entre la bobine et le joint d'étanchéité. La rondelle de coincement comprime le joint contre la surface de centrage et contre la surface discale intérieure et, la carcasse est alors immobilisée sur le corps par ladite rondelle de coincement.

L'anneau de fermeture maintient la bobine en place en étant monté serré dans la carcasse et affleurant avec la première extrémité de la carcasse.

La vanne haute pression est de plus pourvue d'un bouchon agencé sur l'anneau de fermeture, le bouchon obturant l'espace tubulaire de manière étanche.

Le jeu radial entre le trou central et la surface de centrage est inférieur ou égal à 0,5 mm, la carcasse et son trou central peuvent être réalisés par emboutissage ou estampage ou d'autres moyens de mise en forme notamment par enlèvement de matière.

Le corps, la cloche, l'anneau de fermeture et la carcasse sont réalisés en matériaux magnétique et sont agencés en contact les uns avec les autres. Ils forment ainsi un circuit magnétique fermé dans lequel circule le champ magnétique créé par la bobine.

L'invention est également relative à un système d'injection de carburant diesel à rampe commune comprenant une vanne haute pression réalisée selon les paragraphes précédents.

### DESCRIPTION DES FIGURES

Un mode de réalisation de l'invention est maintenant décrit par l'intermédiaire des figures suivantes.
La Figure 1 est une vue en coupe axiale d'une vanne haute pression selon l'invention.
La Figure 2 représente la vanne de la Figure 1 en vue éclatée.

### DESCRIPTION DES MODES DE REALISATION PRÉFÉRÉS

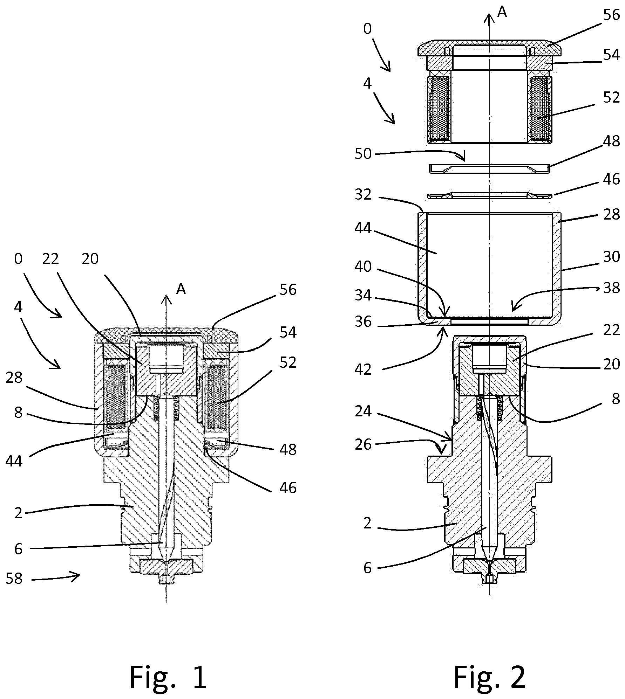

Les Figures 1 et 2 représentent une vanne haute pression 10 destinée à être montée sur la rampe commune du système d'injection diesel 58 d'un moteur à combustion interne.

La vanne comprend un corps 12 réalisé en un matériau magnétique, un électroaimant 14 et une aiguille 16 pilotée entre un état ouvert et un état fermé.

Le corps 12 s'étend selon un axe longitudinal A entre une extrémité liée à la rampe et une extrémité distante 18 de la rampe, laquelle est chapeautée par une cloche 20 cylindrique fixe, également réalisée en un matériau magnétique, et enfermant le noyau 22 de l'électroaimant 14. Le noyau 22 est libre de se déplacer axialement A dans la cloche 20. L'aiguille 16, axialement maintenue dans un alésage central du corps 12, est en contact à une extrémité avec le noyau 22 de sorte à pouvoir commuter d'état. Extérieurement, le corps 12 est pourvu d'une surface cylindrique de centrage 24 de laquelle s'étend radialement une surface d'appui 26.

L'électroaimant 14 comprend une carcasse 28, également réalisée en un matériau magnétique, et ayant une forme de cloche cylindrique à fond plat et percé. La carcasse 28 a donc une partie cylindrique tubulaire 30 s'étendant axialement A entre une première extrémité 32 ouverte et une seconde extrémité 34 de laquelle s'étend radialement, et vers l'axe longitudinal A, une partie discale 36 pourvue d'un trou central 38. Le trou 38 joint une surface discale intérieure 40 de la carcasse 28 et une surface discale extérieure 42 opposée.

La carcasse 28 est agencée sur le corps 12, la surface de centrage 24 passant dans le trou central 38 et la surface distale extérieure 42 venant en contact surfacique contre la surface d'appui 26. Un espace tubulaire 44 est ainsi délimité entre le corps 12 et la carcasse 28, la surface discale intérieure 40 formant le fond de l'espace tubulaire 44.

Un joint d'étanchéité 46 en élastomère est agencé au fond de l'espace tubulaire 44, autour de la surface de centrage 24 et contre la surface distale intérieure 40. Une rondelle de coincement 48, également agencée au fond de la carcasse 28 autour de la surface de centrage 24, est placée sur le joint 46.

La rondelle 48 a une ouverture centrale 50 dont le diamètre et la forme en coin sont choisis pour que la rondelle 48 puisse être mise en place serrée autour de la surface de centrage 24 mais, une fois en place, ne puisse pas se déplacer notamment sous l'action de vibrations. La rondelle 48 placée sur le joint 46 le comprime contre le corps 12 et la carcasse 28 assurant ainsi d'une part la nécessaire l'étanchéité de l'espace tubulaire 44 et d'autre part le positionnement de la carcasse 28 et son immobilisation relativement au corps 12.

La carcasse 28 reçoit ensuite un sous-ensemble comprenant la bobine 52 de l'électroaimant 14, un anneau de fermeture 54 et un bouchon 56. La bobine 52 s'agence librement dans l'espace tubulaire 44 autour du corps 12 et de la cloche 20 le chapeautant. L'anneau de fermeture 54, également réalisé en un matériau magnétique, a la forme d'une rondelle plate dont le diamètre intérieur coulisse librement autour du diamètre extérieur de la cloche 20 et dont le diamètre extérieur, légèrement plus grand que celui intérieur de la carcasse, vient se serrer dans la carcasse enfermant la bobine 52. Le bouchon 56 placé en appui sur l'anneau de fermeture 54 et contre la première extrémité 32 de la carcasse 28 obture de manière étanche l'espace tubulaire 44 assurant également que l'anneau de fermeture 54 affleure la première extrémité 32.

L'électroaimant 14 est assemblé à l'intérieur de la carcasse 28 dans un espace clos parfaitement étanche grâce au joint d'étanchéité 46 et au bouchon 56.

D'un point de vue fonctionnel, lorsque la bobine 52 est alimentée, un champ magnétique se créer et circule entre le corps 12, la carcasse 28, l'anneau de fermeture 54 et la cloche 20, ces pièces montées en contact les unes avec les autres.

De plus, le montage ainsi proposé permet de maintenir la carcasse 28 en position grâce à l'action de la rondelle de coincement 48 sur le joint 46 et sur la carcasse 28. La carcasse 28 n'a plus besoin d'être ajustée à la surface de centrage 24 avec autant de précision que précédemment. Le jeu radial entre le trou central 38 et la surface de centrage 24 est inférieur ou égal à 0,5 mm. La carcasse 28 peut alors être réalisée selon un procédé de mise en forme de type emboutissage ou estampage, le trou central 38 étant réalisé lors de cette mise en forme.

## Revendications

1. Vanne haute pression (10) pour un circuit d'injection diesel à rampe commune d'un moteur à combustion interne, la vanne (10) comprenant un corps (12) axial (A) sur lequel est fixé un électroaimant (14) ayant une carcasse (28), une bobine (52) et, un noyau (22) enfermé sous une cloche (20) chapeautant le corps (12), le noyau (22) actionnant une aiguille (16) entre un état ouvert et un état fermé,
la carcasse (28) ayant une partie tubulaire (30) axiale (A) ouverte à une première extrémité (32) et une partie discale (36) radiale à une seconde extrémité, la partie discale (36) ayant un trou central (38) joignant une surface intérieure (40) opposée à une surface extérieure (42) et, le corps (12) étant pourvu extérieurement d'une surface cylindrique de centrage (24) et d'une surface radiale d'appui (26), la carcasse (28) s'agençant sur le corps (12) autour de la surface de centrage (24), la surface discale extérieure (42) étant en contact surfacique contre la surface d'appui (26) du corps (12), un espace tubulaire (44) étant alors formé entre le corps (12) et la partie tubulaire (30) de la carcasse (28), la bobine (52) étant agencée dans l'espace tubulaire (44) lui-même fermé par un anneau de fermeture (54),
l'étanchéité entre le corps (12) et la carcasse (28) étant assurée par un joint (46) en élastomère agencé autour de la surface de centrage (24) et contre la surface discale intérieure (40), la vanne (10) étant **caractérisée en ce qu'**elle comprend de plus
une rondelle de coincement (48) montée serrée sur la surface de centrage (24) du corps (12) et agencée entre la bobine (52) et le joint d'étanchéité (46), la rondelle de coincement (48) comprimant le joint (46) contre la surface de centrage (24) et contre la surface discale intérieure (40), la carcasse (28) étant alors immobilisée sur le corps (12) par ladite rondelle de coincement (48).

2. Vanne haute pression (10) selon la revendication précédente dans laquelle l'anneau de fermeture (54) maintient la bobine (52) en place, l'anneau (54) étant monté serré dans la carcasse (28) et affleurant avec la première extrémité (32) de la carcasse.

3. Vanne haute pression (10) selon une quelconque des revendications précédentes, pourvue de plus d'un bouchon (56) agencé sur l'anneau de fermeture (54), le bouchon (56) obturant l'espace tubulaire (44) de manière étanche.

4. Vanne haute pression (10) selon une quelconque des revendications précédentes dans laquelle le jeu radial entre le trou central (38) et la surface de centrage (24) est inférieur ou égal à 0,5mm.

5. Vanne haute pression (10) selon une quelconque des revendications précédentes dans laquelle la carcasse (28) et son trou central (38) sont réalisés par emboutissage ou estampage.

6. Vanne haute pression (10) selon l'une quelconque des revendications précédentes dans laquelle le corps (12), la cloche (20), l'anneau de fermeture (54) et la carcasse (28) sont réalisés en matériaux magnétique et sont agencés en contact les uns avec les autres formant un circuit magnétique fermé dans lequel circule le champ magnétique créé par la bobine (28).

7. Système d'injection de carburant diesel à rampe commune (58) comprenant une vanne haute pression (10) réalisée selon l'une quelconque des revendications précédentes.

## Patentansprüche

1. Hochdruckventil (10) für einen Common-Rail-Diesel-Einspritzkreis eines Verbrennungsmotors, wobei das Ventil (10) einen axial (A) verlaufenden Ventilkörper (12) aufweist, an dem ein Elektromagnet (14) befestigt ist, der ein Gehäuse (28), eine Spule (52) und einen Kern (22) aufweist, der unter einer Glocke (20) eingeschlossen ist, welche den Ventilkörper (12) übergreift, wobei der Kern (22) eine Ventilnadel (16) zwischen einem geöffneten Zustand und einem geschlossenen Zustand betätigt,
wobei das Gehäuse (28) an einem ersten Ende (32) einen axial (A) verlaufenden, offenen, rohrförmigen Abschnitt (30) sowie an einem zweiten Ende einen radial verlaufenden, scheibenförmigen Abschnitt (36) aufweist, wobei der scheibenförmige Abschnitt (36) eine mittige Lochung (38) aufweist, die sich an eine Innenfläche (40) anschließt, die einer Außenfläche (42) entgegengesetzt ist, wobei der Ventilkörper (12) außen mit einer zylindrischen Zentrierfläche (24) und einer radialen Abstützfläche (26) versehen ist, wobei das Gehäuse (28) am Ventilkörper (12) um die Zentrierfläche (24) herum angeordnet ist, wobei die scheibenförmige Außenfläche (42) in flächigem Kontakt mit der Abstützfläche (26) des Ventilkörpers (12) ist, wobei ein rohrförmiger Raum (44) dann zwischen Ventilkörper (12) und rohrförmigem Abschnitt (30) des Gehäuses (28) gebildet wird, wobei die Spule (52) in dem rohrförmigen Raum (44) angeordnet ist, der seinerseits von einem Schließring (54) verschlossen wird,
wobei die Dichtheit zwischen Ventilkörper (12) und Gehäuse (28) von einer Dichtung (46) aus Elastomer sichergestellt wird, die um die Zentrierfläche (24) herum und an der scheibenförmigen Innenfläche (40) angeordnet ist, wobei das Ventil (10) **dadurch gekennzeichnet ist, dass** es ferner eine Klemmscheibe (48) aufweist, die an der Zentrierfläche (24) des Ventilkörpers (12) verspannt und zwischen Spule (52) und Dichtung (46) angeordnet ist, wobei die Klemmscheibe (48) die Dichtung (46) an die Zentrierfläche (24) und an die scheibenförmige Innenfläche (40) drückt, wobei das Gehäuse (28) dann über die Klemmscheibe (48) an den Ventilkörper (12) festgelegt wird.

2. Hochdruckventil (10) nach dem vorangehenden Anspruch, wobei der Schließring (54) die Spule (52) in Stellung hält, wobei der Ring (54) in dem Gehäuse (28) verspannt ist und mit dem ersten Ende (32) des Gehäuses bündig liegt.

3. Hochdruckventil (10) nach einem der vorangehenden Ansprüche, ferner enthaltend einen Stopfen (56), der an dem Schließring (54) angeordnet ist, wobei der Stopfen (56) den rohrförmigen Raum (44) in abgedichteter Weise verschließt.

4. Hochdruckventil (10) nach einem der vorangehenden Ansprüche, wobei das radiale Spiel zwischen der mittigen Lochung (38) und der Zentrierfläche (24) geringer oder gleich 0,5 mm ist.

5. Hochdruckventil (10) nach einem der vorangehenden Ansprüche, wobei das Gehäuse (28) und seine mittige Lochung (38) durch Tiefziehen bzw. Prägen ausgebildet sind.

6. Hochdruckventil (10) nach einem der vorangehenden Ansprüche, wobei der Ventilkörper (12), die Glocke (20), der Schließring (54) und das Gehäuse (28) aus magnetischen Werkstoffen hergestellt und in Kontakt miteinander angeordnet sind, wobei sie einen geschlossenen Magnetkreis bilden, in dem das von der Spule (28) erzeugte Magnetfeld verläuft.

7. Common-Rail-Dieselkraftstoff-Einspritzsystem (58), enthaltend ein Hochdruckventil (10), das nach einem der vorangehenden Ansprüche ausgebildet ist.

## Claims

1. High-pressure valve (10) for a common rail diesel injection circuit of an internal combustion engine, the valve (10) comprising a body (12) of axis (A) on which is secured an electromagnet (14) having a field frame (28), a coil (52) and a core (22) that is enclosed beneath a hood (20) capping the body (12), wherein the core (22) actuates a needle (16) between an open state and a closed state,
the field frame (28) having a tubular portion (30) of axis (A), that is open at a first end (32), and a radial disk-shaped portion (36) at a second end, the disk-shaped portion (36) having a central hole (38) joining an internal surface (40) opposite an external surface (42) and, the body (12) being provided externally with a cylindrical centring surface (24) and with a radial bearing surface (26), the field frame (28) being arranged on the body (12) around the centring surface (24), the external disk-shaped surface (42) being in full-face contact against the bearing surface (26) of the body (12), a tubular space (44) then being formed between the body (12) and the tubular portion (30) of the field frame (28), the coil (52) being arranged in the tubular space (44) which is itself closed by a closing ring (54),
the seal between the body (12) and the field frame (28) being provided by an elastomer seal (46) arranged around the centring surface (24) and against the internal disk-shaped surface (40), the valve (10) being **characterized in that** it further comprises
a wedging washer (48) mounted tightly on the centring surface (24) of the body (12) and arranged between the coil (52) and the seal (46), the wedging washer (48) compressing the seal (46) against the centring surface (24) and against the internal disk-shaped surface (40), the field frame (28) then being immobilized on the body (12) by said wedging washer (48).

2. High-pressure valve (10) according to the preceding claim, in which the closing ring (54) holds the coil (52) in place, the ring (54) being mounted tightly in the field frame (28) and being flush with the first end (32) of the field frame.

3. High-pressure valve (10) according to either one of the preceding claims, further provided with a stopper (56) arranged on the closing ring (54), the stopper (56) closing off the tubular spacers bracket (44) in a sealed manner.

4. High-pressure valve (10) according to any one of the preceding claims, in which the radial play between the central hole (38) and the centring surface (24) is less than or equal to 0.5 mm.

5. High-pressure valve (10) according to any one of the preceding claims, in which the field frame (28) and its central hole (38) are made by deep drawing or stamping.

6. High-pressure valve (10) according to any one of the preceding claims, in which the body (12), the hood (20), the closing ring (54) and the field frame (28) are made of magnetic materials and are arranged in contact with one another, forming a closed magnetic circuit in which flows the magnetic field created by the coil (28).

7. Common rail diesel fuel injection system (58) comprising a high-pressure valve (10) created according to any one of the preceding claims.
